# EUROPÄISCHE PATENTSCHRIFT

(11) **EP 3 686 061 B1**
(45) Veröffentlichungstag und Bekanntmachung des Hinweises auf die Patenterteilung: **12.01.2022**
(21) Anmeldenummer: 20153323.9
(22) Anmeldetag: 23.01.2020
(51) Int. Cl.: B60R 7/04

(54) **ADAPTER FÜR EIN KRAFTFAHRZEUG**
ADAPTER FOR A MOTOR VEHICLE
ADAPTATEUR POUR UN VÉHICULE AUTOMOBILE

(30) Priorität: 25.01.2019 DE 202019100463 U
(43) Veröffentlichungstag der Anmeldung: 29.07.2020
(73) Patentinhaber: SARP Feinmechanik, 85659 Forstern (DE)
(72) Erfinder: Schwinghammer, Anton, 85659 Preisendorf (DE); Bader, Peter, 82140 Olching (DE); Ketterl, Franz, 80997 München (DE); Ludwig, Philipp, 85402 Kranzberg (DE)
(74) Vertreter: Misselhorn, Hein-Martin

(56) Entgegenhaltungen:
- EP-A1- 3 132 975
- EP-A1- 3 387 900
- WO-A1-2004/002773
- WO-A1-2016/116610
- CN-U- 205 395 837
- DE-A1- 19 744 978
- DE-A1-102009 058 892
- DE-U1- 9 113 078
- JP-A- 2014 061 773

## Beschreibung

Die Erfindung betrifft einen Adapter für ein Kraftfahrzeug.

Bei der Entwicklung von Kraftfahrzeugen muss bei Testfahrten üblicherweise Messtechnik an Bord des Fahrzeugs transportiert werden. Sehr häufig befindet sich die Messtechnik im Innenraum des Kraftfahrzeugs, um beispielsweise während der Testfahrt Zugriff auf die Messtechnik haben zu können. Damit die Messtechnik während der Fahrt nicht verrutscht, wird die Messtechnik verzurrt.

Ein Verzurren ist ein vergleichsweise langer Vorgang und das Verzurren muss mit höchster Sorgfalt erfolgen, damit die Messtechnik im Fahrbetrieb sicher mit dem Fahrzeug verbunden ist. Problematisch ist, dass nicht überall am Fahrzeug Verzurrösen angebracht sind, sodass das Verzurren unter Umständen nur unter erschwerten Bedingungen möglich ist.

Das Dokument JP 2014-61773 A offenbart einen Adapter nach dem Oberbegriff des Anspruch 1.

Vor diesem Hintergrund ist es Aufgabe der Erfindung, einen Adapter für ein Kraftfahrzeug zur Verfügung zu stellen, welcher mit dem Adapter verbundene Gegenstände, wie beispielsweise Messtechnik, schnell und einfach mit dem Kraftfahrzeug verbindet.

Die erfindungsgemäße Lösung besteht aus einem Adapter mit den Merkmalen des Anspruchs 1.

Durch das Verrasten des Adapters ist ein sehr sicheres und schnelles Verbinden des Adapters mit dem Kraftfahrzeug und damit auch mit dem am Adapter befestigten Gegenstand möglich. Der Begriff Gegenstand ist sehr allgemein aufzufassen, beispielsweise ist unter dem Begriff Gegenstand Messtechnik, eine Halterung für einen Aktenkoffer, ein Einkaufskorb, eine Getränkekiste, eine Box oder Boxen, beispielsweise zum Transport von Tieren, ein Laptophalter, beispielsweise für Außendienstmitarbeiter oder Messtechniker oder dergleichen zu verstehen. Insbesondere ist die am Kraftfahrzeug angebrachte Halterung eine Isofix-Halterung.

Vorteilhaft umfasst die Rastvorrichtung einen unteren und einen oberen Rastfinger. In einer ersten Position verrasten die Rastfinger zweckmäßig mit der Halterung. Zweckmäßig sind die Rastfinger in der ersten Position arretiert. In einer zweiten Position geben die Rastfinger zweckmäßig die Halterung frei. Zweckmäßig ist die Halterung eine Öse, insbesondere eine metallische Öse. Besonders zweckmäßig ist die Halterung ein Metallbügel, der fest mit dem Fahrzeug verbunden ist. Es kann zweckmäßig sein, dass der Metallbügel als Brillenhaltebügel ausgebildet ist. Vorteilhaft sind die Rastfinger als Klauen ausgebildet, die insbesondere aufeinander zu- und voneinander weg schwenkbar sind. Es kann auch vorteilhaft sein, dass die Rastfinger als Zangen ausgebildet sind, die insbesondere rotatorisch bewegbar sind und die Halterung mindestens teilweise, insbesondere vollständig in der ersten Position umgreifen. Es kann zweckmäßig sein, dass nur einer der beiden Rastfinger schwenkbar und/oder drehbar ist, wohingegen insbesondere der andere der beiden Rastfinger fest ist.

Erfindungsgemäß ist die Rastvorrichtung relativ zur Halteplatte verschiebbar. Besonders vorteilhaft ist die Rastvorrichtung parallel zur Halteplatte verschiebbar. Die Halteplatte umfasst eine Arretiervorrichtung, mit welcher die Rastvorrichtung an der Halteplatte arretiert werden kann. Dadurch kann die Halteplatte, auf welcher der Gegenstand angeordnet ist, insbesondere etwa parallel zur Fahrtrichtung, insbesondere zur Rückenlehne hin verschoben werden. Damit kann die Position des Gegenstands, insbesondere des Messgeräts eingestellt werden. Besonders zweckmäßig sind die Messgeräte und/oder die Halteplatte oder ein mit der Halteplatte verbundener Hilfsträger in fahrbereit montiertem Zustand möglichst nahe an der Rückenlehne angebracht, eventuell sogar gegen deren Polsterung oder gar Tragrahmenstruktur verspannt. Auf diese Art und Weise wird eine besonders gute Fixierung erreicht, z. B. auch bei scharf gefahrenen Kurven oder auf dem Slalomparcours, etwa beim Elchtest. Darüber hinaus ist eine derart gute Fixierung auch dann sinnvoll, wenn der Adapter ein oder mehrere Messgeräte trägt, die möglichst unverfälscht Karosseriebewegungen und/oder -beschleunigungen aufnehmen sollen.

Vorteilhaft ist an der Unterseite der Halteplatte ein Abstandshalter zum Halten eines Abstands zwischen Fahrzeugsitz und Halteplatte vorgesehen, und dass der Gegenstand an der der Unterseite gegenüberliegenden Oberseite befestigbar ist. Dadurch ist an der Halteplatte eine Befestigung des Gegenstands beispielsweise als Schraubverbindung möglich, wobei die Befestigung, beispielsweise die Schraube oder die Mutter, nicht direkt auf dem Sitz aufliegt. Der Abstand reduziert oder verhindert demnach Beschädigungen am Sitz.

Erfindungsgemäß umfasst der Abstandshalter zwei, insbesondere parallel verlaufende Rastarme. Erfindungsgemäß ist je eine der Rastvorrichtungen an je einem Ende der Rastarme angeordnet. Damit ist eine sehr stabile Grundstruktur des Adapters ermöglicht, wobei der Adapter dennoch leicht ist.

Erfindungsgemäß sind die Rastarme derart am Abstandshalter oder an der Halteplatte geführt und wirken derart mit einer Arretiervorrichtung zusammen, dass die Rastarme relativ zu den Abstandshaltern bzw. relativ zur Halteplatte in und entgegen einer Verschieberichtung P verschoben werden können, solange die Arretiervorrichtung nicht aktiviert ist. Sodann sind sie an den Abstandshaltern bzw. an der Halteplatte festgelegt, wenn die Arretiervorrichtung aktiviert ist.

Erfindungsgemäß ist es vorgesehen, dass die Arretiervorrichtung ein Ratschenmechanismus ist. Dieser gestattet in aktiviertem Zustand, dass die Rastarme derart, vorzugsweise nach Art eines Teleskops, relativ zu dem ihnen jeweils zugeordneten Abstandshalter bzw. relativ zu der Halteplatte verschoben werden können, dass die einer Rücksitzlehne des Fahrzeugs unmittelbar gegenüberliegende Stirnseite der Halteplatte näher an die Rücksitzlehne herankommt oder sogar deren Polsterung örtlich zusammendrückt, woraufhin der betroffene Rastarm selbsttätig in dieser Position an dem ihm zugeordneten Abstandshalter festgelegt wird.

Idealerweise ist die Arretiervorrichtung ein Ratschenmechanismus, der ein immer dichteres Heranschieben der Halteplatte an die Rücksitzlehne oder deren immer stärkere Kompression erlaubt, aber verhindert, dass die Halteplatte sich aus einer einmal erreichten Sperrposition wieder in Gegenrichtung, weg von der Rücksitzlehne bewegt.

Besonders günstig ist es, wenn die Arretiervorrichtung so gestaltet ist, dass sie folgende kraftsparende Wechselbewegung erlaubt bzw. folgendes Verfahren:
Die Rastfinger der Rastvorrichtung werden mit ihrem Haltepartner am Fahrzeug formschlüssig verbunden. Dann werden die Rastarme gemeinsam derart relativ zu der Halteplatte und/oder den Abstandshaltern verschoben, dass die Halteplatte oder deren Hilfsträger oder die Messgeräte bzw. die sonstige Nutzlast auf der Halteplatte gegen die Rücksitzlehne bzw. deren Polsterung anliegen. Nun wird im Wechselvorschub eine Verspannung mit der Rücksitzlehne erreicht: Zunächst wird im Schritt 1 der eine Rastarm zumindest um eine Raststellung verschoben, wo er dann einrastet, sodass die Halteplatte oder deren Hilfsträger oder die Messgeräte auf seiner Seite noch inniger gegen die Rücksitzlehne anliegen oder deren Polsterung komprimieren (ggf. noch stärker komprimieren). Der gleiche Vorgang wird danach als Schritt 2 für den Rastarm auf der anderen Seite wiederholt. Nötigenfalls werden danach die Schritte 1 und 2 nochmals oder sogar noch mehrmals wiederholt. Dadurch kann mit wesentlich weniger Kraft bzw.
Maximalkraft pro Schritt ein sehr inniges Anliegen gegen die Rücksitzlehne bzw. eine sehr starke Verspannung gegen deren Polsterung erreicht werden - was oft nicht möglich wäre, wenn man in einem einzigen Schritt auf ganzer Breite die Polsterung der Rücksitzlehne zusammendrücken müsste.

Vorzugsweise ist auf der der Rücksitzlehne konträr abgewandten Stirnseite der Halteplatte mindestens ein Griff, vorzugsweise in Gestalt mindestens eines Griffbügels angebracht, der die Ausübung der "Wechselvorschub-Methode" erleichtert.

Zweckmäßig umfasst der Adapter einen Stützbügel zur Verhinderung einer Rotation um die Halterung. Insbesondere umfasst der Stützbügel einen Haltegriff zum Halten des Adapters. Durch den Stützbügel erfolgt neben der Fixierung an der Halterung eine zweite Fixierung, welche eine Rotation des Adapters um die Fixierung verhindert. Der Griff erleichtert zudem das Ein- und Ausbauen des Adapters im Fahrzeug.

Vorteilhaft umfasst der Adapter eine Sitzplatte, die in einem Abstand zur Halteplatte mit der Halteplatte fest verbunden ist, wobei die Sitzplatte zum Auflegen des Adapters auf den Fahrzeugsitz vorgesehen ist. Damit ist eine flächige Auflagefläche des Adapters gegeben, sodass der Adapter das Gewicht gleichmäßig verteilt und damit auch bei hohem Gewicht des am Adapter befestigten Gegenstands der Sitz nicht beschädigt wird.

Vorzugsweise umfasst der Adapter einen Haltebügel, wobei der Haltebügel insbesondere stirnseitig, insbesondere an der der Rastvorrichtung abgewandten Stirnseite des Adapters angeordnet ist. Damit kann der Adapter gut ein- und ausgebaut werden. Der Haltebügel kann insbesondere auch dazu dienen, um den Adapter zusätzlich zu verzurren.

Besonders zweckmäßig umfasst der Adapter eine Bodenstütze. Die Bodenstütze ist insbesondere an der Halteplatte, an der Sitzplatte, am Haltebügel oder an einem oder an beiden Rastarmen angeordnet, insbesondere fest und besonders vorteilhaft drehfest verbunden. Die Bodenstütze ist insbesondere stirnseitig, insbesondere an der der Rastvorrichtung abgewandten Stirnseite des Adapters angeordnet. Die Bodenstütze erstreckt sich bis zum Fahrzeugboden im Innenraum des Fahrzeugs. Die Bodenstütze verhindert beispielsweise bei plötzlicher starker Verzögerung des Fahrzeugs und/oder bei schweren Messgeräten, dass der Messgeräteträger zusammen mit den Messgeräten in den Fahrzeugsitz eintaucht und sich die Messgeräte somit in Richtung des Fahrzeugbodens translatorisch und/oder rotatorisch bewegen.

Zweckmäßig ist die Befestigungsvorrichtung lösbar und insbesondere eine Schraubverbindung, eine Klemmvorrichtung oder eine Bajonettverbindung. Damit kann der Adapter mit verschiedenen Gegenständen bestückt werden.

Zweckmäßig umfasst die Befestigungsvorrichtung ein Kugelgelenk. Zweckmäßig umfasst das Kugelgelenk einen Schnellspanner, der das Kugelgelenk fixiert, sodass das Gelenk fixiert ist. Zweckmäßig ist am Kugelgelenk eine Halterung für einen Gegenstand, insbesondere ein Laptop, Messgerät oder dergleichen angebracht. Die Halterung ist zweckmäßig aufgrund des Kugelgelenks horizontal ausrichtbar. Zweckmäßig kann die Halterung auch in einer Ebene außerhalb der Horizontalen ausgerichtet sein, die beispielsweise ein komfortables Bedienen des Gegenstands, insbesondere des Laptops ermöglicht. Dadurch, dass Sitzflächen üblicherweise im Fahrzeug leicht geneigt sind, kann mit dem Kugelgelenk die Neigung am Gegenstand ausgeglichen werden. Außerdem kann der Gegenstand nahezu beliebig ausgerichtet werden, sodass der Gegenstand bedienbar bzw. nutzbar ist. Durch Arretierung des Kugelgelenks ist der Gegenstand fest mit dem Adapter und bei mit dem Fahrzeug verrastetem Adapter fest mit dem Fahrzeug verbunden.

Die Erfindung umfasst vorteilhaft einen Laptophalter für ein Kraftfahrzeug gemäß Anspruch 10, wobei der Laptophalter einen Adapter nach einem der Ansprüche 1 bis 9 umfasst, und wobei der Laptophalter an der Befestigungsvorrichtung des Adapters befestigt ist.

Die Erfindung umfasst zweckmäßig eine Messgerätebefestigungsvorrichtung für ein Kraftfahrzeug gemäß Anspruch 11, wobei die Messgerätebefestigungsvorrichtung einen Adapter nach einem der Ansprüche 1 bis 9 umfasst, wobei die Messgerätebefestigungsvorrichtung an der Befestigungsvorrichtung der Halteplatte des Adapters befestigt ist, und wobei die Messgerätebefestigungsvorrichtung zum Befestigen von Messtechnik im Fahrzeug vorgesehen ist.

Der erfindungsgemäße Adapter soll hierbei nicht auf die oben beschriebenen Anwendungs- und Ausführungsformen beschränkt sein. Insbesondere kann der erfindungsgemäße Adapter zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. Ausführungsbeispiele sind in der Erfindung dargestellt. Die Zeichnung, die Beschreibung und die Ansprüche enthalten zahlreiche Merkmale in Kombination, die auch einzeln betrachtet und zu sinnvollen weiteren Kombinationen zusammengefasst werden können.

### Es zeigen

**Fig. 1** eine Übersichtsdarstellung eines Adapters mit einem daran befestigten Gegenstand im eingebauten Zustand,
**Fig. 2** eine schematische Darstellung des Adapters,
**Fig. 3 bis 8** weitere schematische Darstellungen des Adapters mit daran befestigten Gegenständen, und
**Fig. 9 bis 12** schematische Darstellungen von Gegenständen, die am Adapter befestigbar sind,
**Fig. 13 bis 16** schematische Darstellungen von Rastfingern,
**Fig. 17** eine schematische Darstellung einer Bodenstütze,
**Fig. 18 bis 19** schematische Darstellungen einer Befestigungsvorrichtung in Form eines Kugelgelenks.

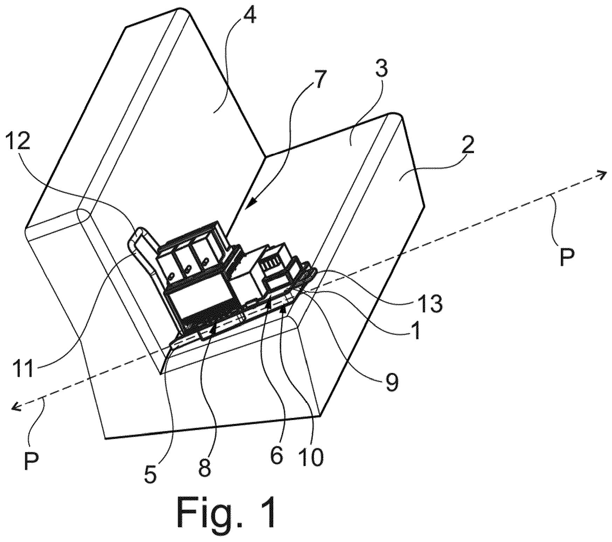

In **Fig. 1** ist ein erstes Ausführungsbeispiel eines Adapters 1 gezeigt. Der Adapter 1 liegt auf einer Sitzfläche 3 eines Fahrzeugsitzes 2, auch Sitzbank genannt, eines nicht dargestellten Fahrzeugs auf. Der Adapter 1 lehnt sich an eine Rückenlehne 4 der Sitzbank 2 an. Der Fahrzeugsitz 2 umfasst eine nicht dargestellte Halterung. Der Adapter 1 umfasst eine Rastvorrichtung 5, welche zum Verrasten des Adapters 1 mit der an dem Fahrzeugsitz 2 angebrachten Halterung vorgesehen ist. **Fig. 1** zeigt den Adapter 1 im mit der Halterung an dem Fahrzeugsitz 2 verrasteten Zustand.

Der Adapter 1 umfasst eine Halteplatte 6. An der Halteplatte 6 ist ein Gegenstand 7 befestigt. Der Gegenstand 7 ist an der Oberseite 9 der Halteplatte 6 befestigt. Im Ausführungsbeispiel nach **Fig. 1** ist ein solcher Gegenstand 7 beispielsweise Elektronik, welche als Messtechnik verwendet wird.

An der Unterseite 10 der Halteplatte 6 ist ein Abstandshalter 8 angeordnet. Durch den Abstandshalter 8 ist ein Abstand zwischen der Halteplatte 6 und des Fahrzeugsitzes 2 erzeugt, sodass die Halteplatte 6 nicht direkt auf dem Fahrzeugsitz 2 aufliegt.

Der Adapter 1 umfasst einen Stützbügel 11. Der Stützbügel 11 steht etwa orthogonal zur Halteplatte 6. Der Stützbügel 11 ist mit der Halteplatte 6 verbunden. Der Stützbügel 11 ist im bzw. etwa im oberen Drittel, also dem Drittel, welches der Halteplatte 6 abgewandt ist, abgeschrägt. Die Schräge verläuft in Richtung auf die Rückenlehne 4, also weg von der Halteplatte 6. Die Schräge dient dazu, dass der Stützbügel 11 mindestens teilweise, insbesondere mindestens teilweise im oberen Drittel des Stützbügels 11 an der Rückenlehne 4 anliegt. Der Stützbügel 11 unterbindet weitgehend eine Rotation des Adapters 1 um die Halterung. Am oberen Ende des Stützbügels 11 ist ein Haltegriff 12 angebracht.

An der stirnseitigen, also der Rückenlehne 4 abgewandten Seite des Adapters 1 ist ein Haltebügel 13 angeordnet. Der Haltebügel 13 ist an dem Ende des Adapters 1 angebracht, der an der der Rastvorrichtung 5 abgewandten Stirnseite des Adapters 1 liegt.

Die Rastvorrichtung 5 ist relativ zur Halteplatte 6 verschiebbar ausgeführt, insbesondere ist die Rastvorrichtung 5 parallel zur Halteplatte 6 verschiebbar. Beispielsweise kann die Rastvorrichtung 5 über ein in den Figuren nicht gezeigtes Teleskopsystem, beispielsweise über Rohre, die ineinander geschoben werden können, ausgeführt sein. Die Halteplatte 6 umfasst erfindungsgemäß eine in den Figuren nicht dargestellte Arretiervorrichtung, mit welcher die Rastvorrichtung 5 an der Halteplatte 6 arretiert werden kann. Dadurch kann die Halteplatte 6, auf welcher der Gegenstand 7 angeordnet ist, insbesondere etwa parallel zur Fahrtrichtung des Fahrzeugs, von der Rückenlehne 4 weg oder zur Rückenlehne 4 hin zunächst verschoben und anschließend arretiert werden. Damit kann die Position des Gegenstands 7, insbesondere des Messgeräts, relativ zur Rückenlehne 4 eingestellt werden. Besonders zweckmäßig sind die Messgeräte eher vorn, also am vorderen Ende der Sitzbank 2 und damit möglichst weit entfernt von der Rückenlehne 4 angebracht.

Zweckmäßig ist die am Fahrzeugsitz 2 angebrachte Halterung eine Isofix-Halterung, welche der Norm ISO 13216 entspricht. Zweckmäßig ist die Halterung eine Öse, insbesondere eine metallische Öse. Besonders zweckmäßig ist die Halterung ein Metallbügel, der fest mit dem Fahrzeug verbunden ist. Es kann zweckmäßig sein, dass der Metallbügel als Brillenhaltebügel ausgebildet ist.

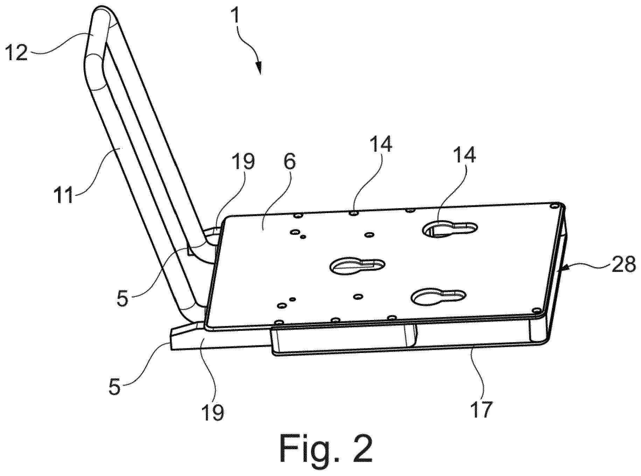

**Fig. 2** zeigt den Adapter 1 in einem weiteren Ausführungsbeispiel. Im Ausführungsbeispiel nach **Fig. 2** ist der Stützbügel 11 in einem Winkel an der Halteplatte 6 befestigt, welche nicht orthogonal ist. Im Ausführungsbeispiel nach **Fig. 2** beträgt der Winkel zwischen Halteplatte 6 und Stützbügel 11 mehr als 90°, insbesondere mehr als 100°. Eine Schräge des Stützbügels, insbesondere im oberen Drittel, ist im Ausführungsbeispiel nach **Fig. 2** nicht vorgesehen. An der Halteplatte 6 sind diverse Befestigungsvorrichtungen 14 angebracht. Eine solche Befestigungsvorrichtung 14 kann ein Langloch, ein Langloch mit unterschiedlich großen Bohrungsöffnungen, eine Bohrung, eine Bohrung mit Gewinde, eine Klemmvorrichtung, eine Bajonettverbindung oder dergleichen sein.

Gegenüberliegend zur Halteplatte 6, also auf der Seite des Adapters 1, die der Sitzfläche 3 zugewandt ist, ist beim Adapter 1 in der Ausführungsform nach **Fig. 2** eine Sitzplatte 17 vorgesehen. Zwischen der Sitzplatte 17 und der Halteplatte 6 besteht ein Abstand. Im Ausführungsbeispiel besteht zwischen der Sitzplatte 17 und der Halteplatte 6 ein Spalt 28. Der Spalt 28 ist für die Befestigungsvorrichtung 14 vorgesehen, damit beispielsweise der Gegenstand 7 verschraubt oder verklemmt oder dergleichen werden kann. Die Sitzplatte 17 liegt im bestimmungsgemäßen Gebrauch im Fahrzeug weitgehend vollflächig auf der Sitzfläche 3 auf. Dadurch ist die Gewichtskraft, mindestens teilweise bestehend aus Adapter 1 und Gegenstand 7, flächig auf die Sitzfläche 3 verteilt.

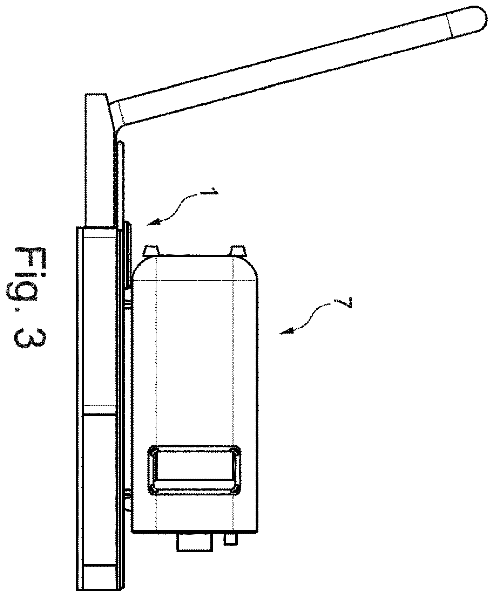

**Fig. 3** zeigt einen Gegenstand 7, der mit der Halteplatte 6 verschraubt ist.

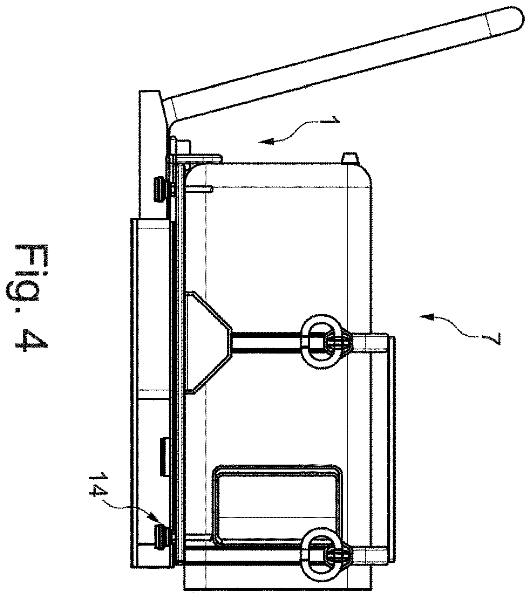

In **Fig. 4** ist ein Gegenstand 7 gezeigt, der mit der Halteplatte 6, insbesondere mit der als Langlöcher mit unterschiedlichen Durchmessern ausgeführten Befestigungsvorrichtung 14 verklemmt ist.

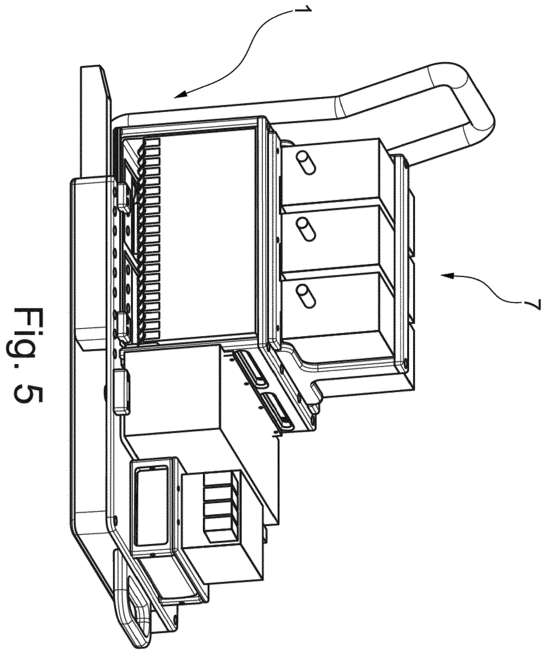

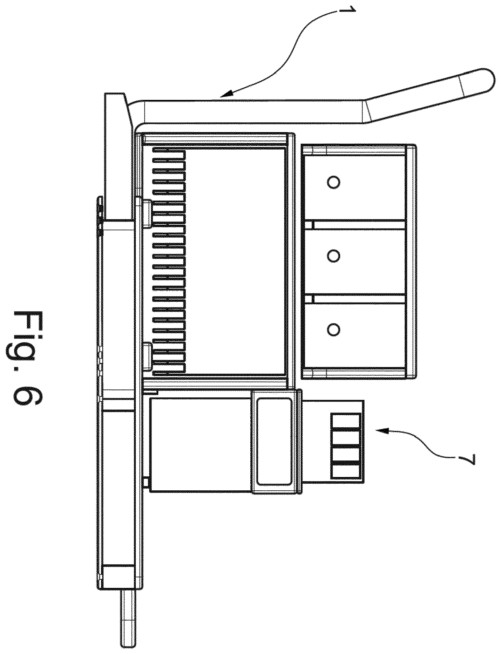

**Fig. 5** **und** **6** zeigen den in **Fig. 1** dargestellten Adapter 1 sowie den in **Fig. 1** dargestellten Gegenstand 7 im nicht im Fahrzeug verbauten Zustand. Dadurch, dass der Gegenstand 7 fest mit dem Adapter 1 verbunden ist, kann die ganze Einheit aus Gegenstand 7 und Adapter 1 gut von einer Person getragen werden, insbesondere ohne dass beispielsweise der Gegenstand 7 relativ zum Adapter 1 verrutscht. Dadurch kann der Gegenstand gut in das Fahrzeug eingebaut und aus dem Fahrzeug herausgenommen werden.

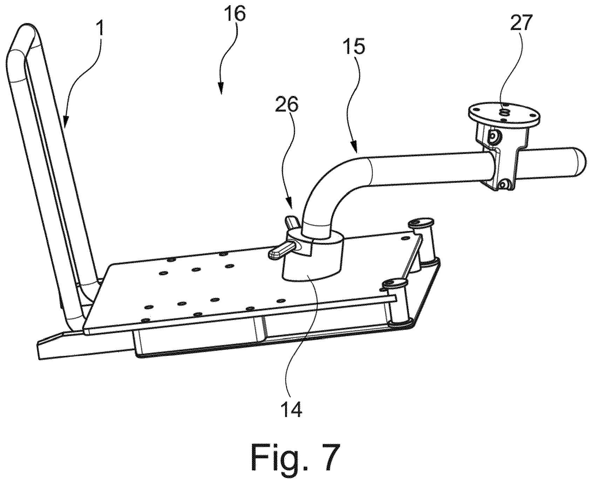

**Fig. 7** zeigt eine Laptophalterung 16, welche den Adapter 1 und einen daran befestigten Laptophalter 15 umfasst. Der Laptophalter 15 ist an der Befestigungsvorrichtung 14 befestigt. Im Ausführungsbeispiel ist der Laptophalter 15 mit dem Adapter 1 verschraubt. Alternativ könnte der Laptophalter 15 auch verklemmt, verschweißt oder dergleichen sein.

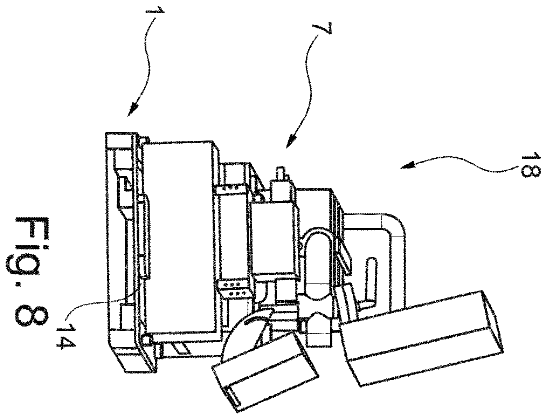

**Fig. 8** zeigt eine Messgerätebefestigungsvorrichtung 18, welche den Adapter 1 und einen daran befestigten Gegenstand 7 in Form von Messgeräten umfasst. Die Messgeräte sind an der Befestigungsvorrichtung 14 befestigt, im Ausführungsbeispiel verklemmt. Alternativ kommt eine Verschraubung, Verschweißung oder dergleichen in Betracht.

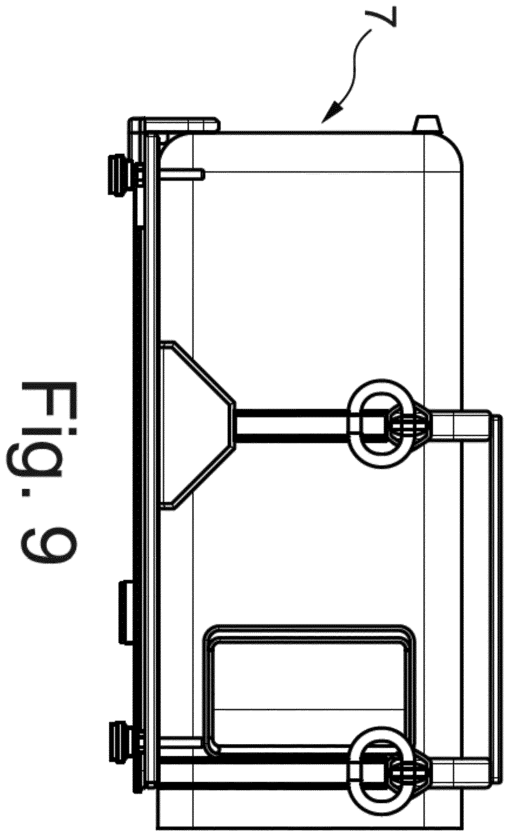

Die **Fig. 9 bis 12** zeigen diverse Ausführungsbeispiele von Gegenständen 7, die am Adapter 1 befestigbar sind. Diese Ausführungsbeispiele sind nur eine kleine Teilmenge von Gegenständen, die am Adapter 1 befestigbar sein können.

Die **Fig. 9** zeigt beispielhaft als Gegenstand 7 eine Box.

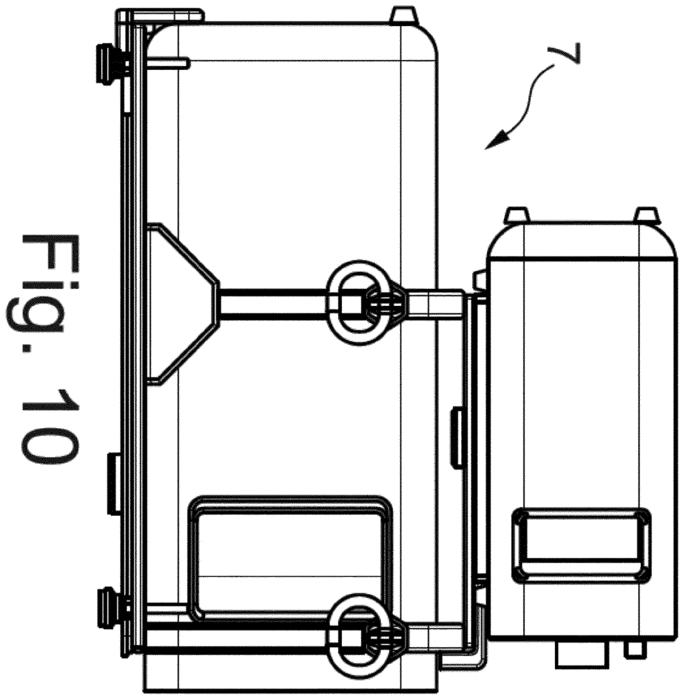

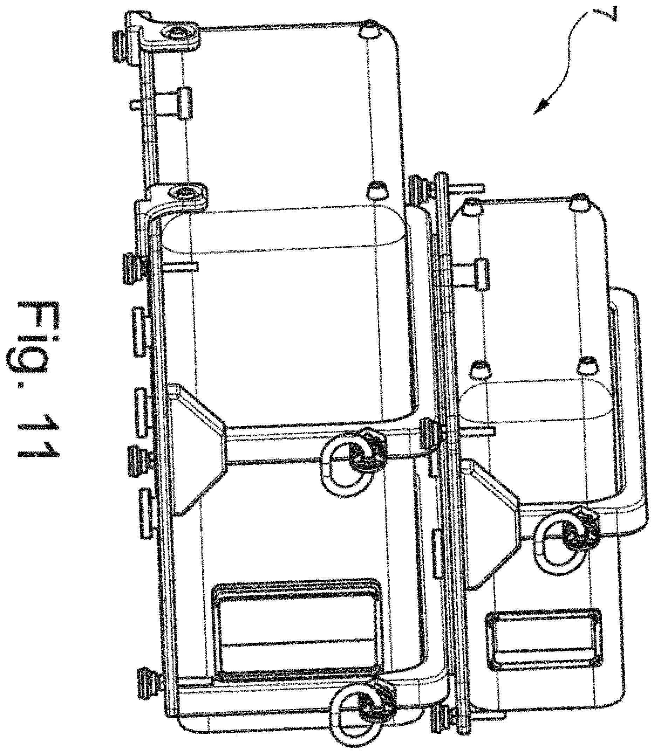

**Fig. 10** **und** **11** zeigen beispielhaft als Gegenstand 7 zwei Boxen, die übereinander angeordnet sind.

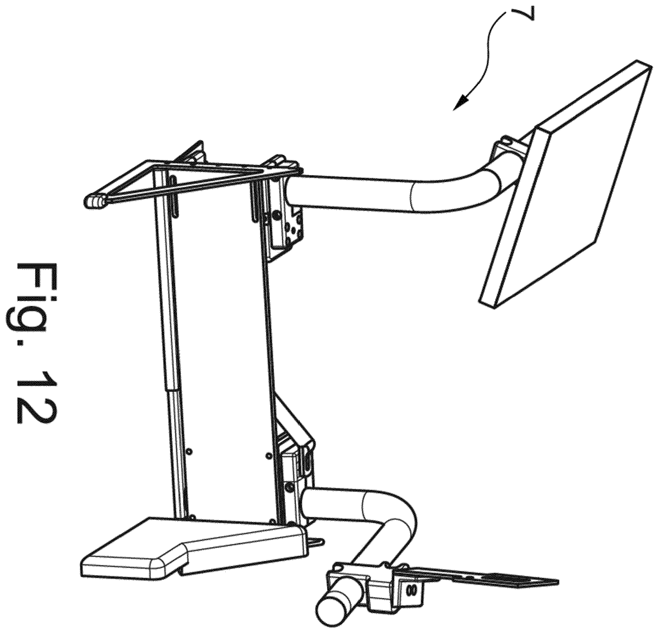

**Fig. 12** zeigt beispielhaft als Gegenstand Platten, auf denen beispielsweise ein Laptop, Schreibgeräte, Messtechnik oder dergleichen angeordnet und befestigt sein können.

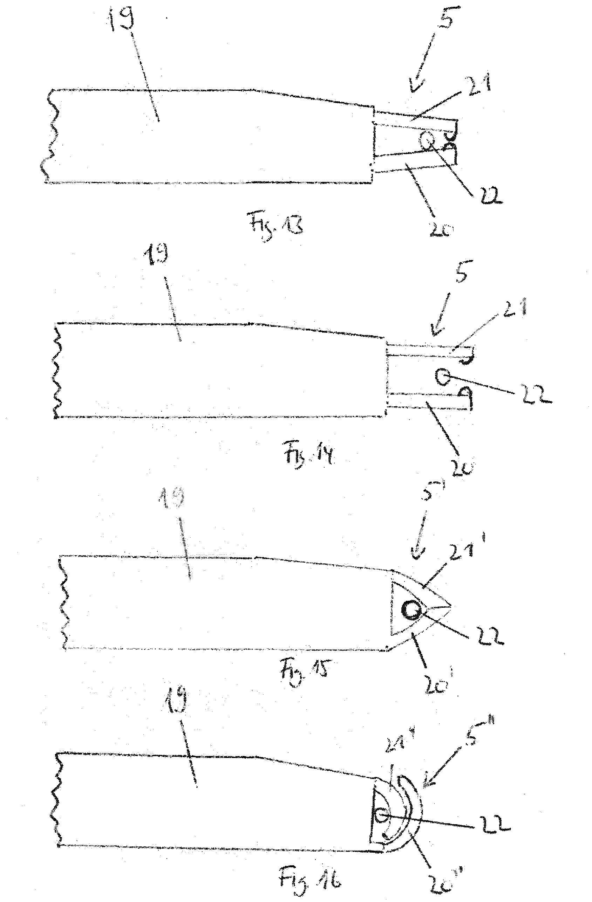

Die **Fig. 13 bis 16** zeigen Ausführungsbeispiele der Rastvorrichtung 5. Die Rastvorrichtung 5 umfasst einen unteren Rastfinger 20 und einen oberen Rastfinger 21. In einer in **Fig. 13** gezeigten ersten Position verrasten die Rastfinger 20, 21 zweckmäßig mit der Halterung. Die Halterung ist in **Fig. 13 bis 16** als metallene Öse 22 ausgeführt. Zweckmäßig sind die Rastfinger 20, 21 in der in **Fig. 13** gezeigten ersten Position mit der Halterung arretiert.

In einer in **Fig. 14** gezeigten zweiten Position geben die Rastfinger 20, 21 zweckmäßig die Halterung frei. Der Adapter 1 kann somit vom Fahrzeug entfernt werden. Im Ausführungsbeispiel nach den **Fig. 13 bis 15** sind die Rastfinger 20, 21 als Klauen ausgebildet, die insbesondere aufeinander zu- und voneinander weg schwenkbar sind.

Die in **Fig. 15** gezeigten Rastfinger 20', 21' unterscheiden sich von den in **Fig. 13 und 14** gezeigten Rastfinger 20, 21 durch die geometrische Form. Die in **Fig. 13** und 14 gezeigten Rastfinger 20, 21 sind im Wesentlichen gerade, also etwa linear ausgebildet, wohingegen die in **Fig. 15** gezeigten Rastfinger 20', 21' gekrümmt ausgebildet sind. Die Krümmung verläuft zweckmäßig dergestalt, dass die Krümmung der Rastfinger 20', 21' in Richtung auf die metallene Öse 22 verläuft. Die in **Fig. 13 bis 15** dargestellten Rastfinger 20, 21, 20', 21' können als Klauen bezeichnet werden. Die Klauen lassen sich aufeinander zu- und voneinander wegbewegen, insbesondere sind die Klauen verschwenkbar. Zweckmäßig ist hierfür ein Gelenk, insbesondere ein Scharniergelenk oder dergleichen vorgesehen, um die die Klauen verschwenkbar sind. Das Gelenk verbindet zweckmäßig die Klauen und den Rastarm 19. Die Klauen sind arretierbar und bilden somit die Rastvorrichtung 5, 5'.

Die in **Fig. 16** dargestellten Rastfinger 20", 21" sind zangenförmig ausgebildet. Die Zangen sind insbesondere rotatorisch bewegbar. Die Zangen sind arretierbar und bilden somit die Rastvorrichtung 5".

Die Klauen bzw. die Zangen umgreifen die Halterung mindestens teilweise, insbesondere vollständig in der ersten Position. Es kann zweckmäßig sein, dass nur einer der beiden Rastfinger 20, 20', 20" schwenkbar und/oder drehbar ist, wohingegen insbesondere der andere der beiden Rastfinger fest ist.

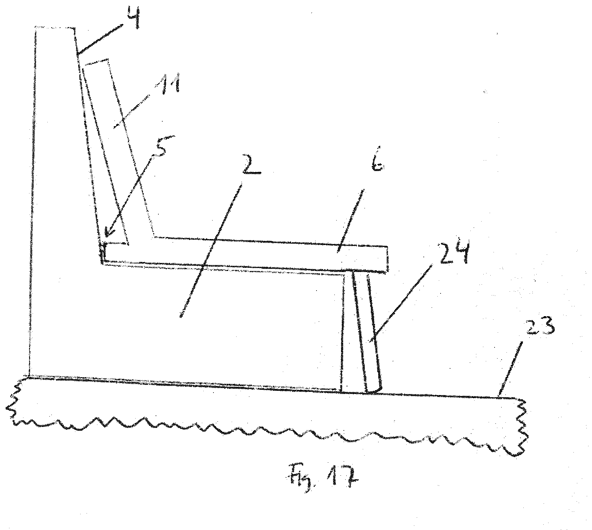

Der Adapter 1 umfasst in einem weiteren Ausführungsbeispiel eine in **Fig. 17** dargestellte Bodenstütze 24. Die Bodenstütze 24 ist an der Halteplatte 6, an der Sitzplatte 17, am Haltebügel 13 oder an einem oder an beiden Rastarmen 19 angeordnet, insbesondere fest und besonders vorteilhaft drehfest verbunden. Die Bodenstütze 24 ist stirnseitig, insbesondere an der der Rastvorrichtung 5 abgewandten Stirnseite des Adapters 1 angeordnet. Die Bodenstütze 24 erstreckt sich bis zum in **Fig. 17** schematisch dargestellten Fahrzeugboden 23 im Innenraum des Fahrzeugs. Die Bodenstütze 24 verhindert beispielsweise bei plötzlicher starker Verzögerung des Fahrzeugs und/oder bei schweren Messgeräten, dass der Messgeräteträger zusammen mit den Messgeräten in den Fahrzeugsitz 2 eintaucht und die Messgeräte sich somit in Richtung des Fahrzeugbodens translatorisch und/oder rotatorisch bewegen.

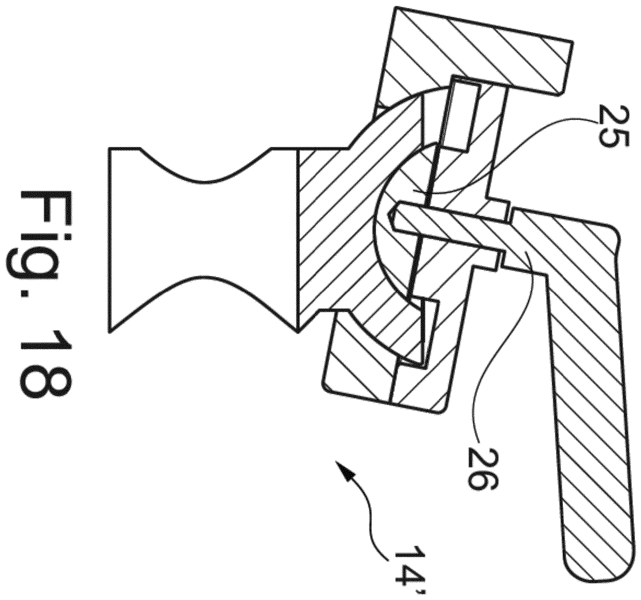

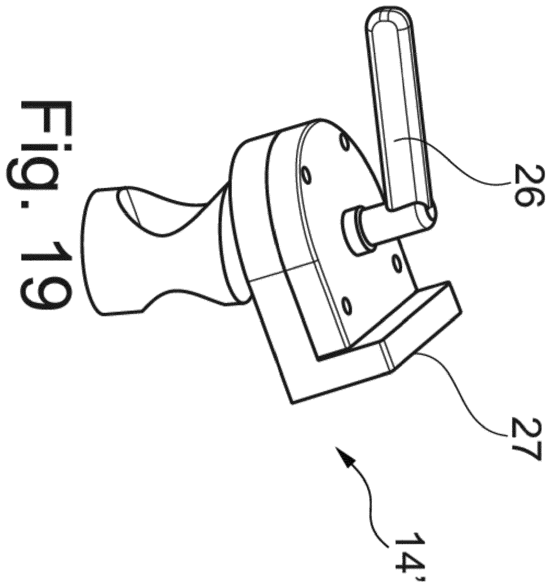

Die **Fig. 18** **und** **19** zeigen eine zweite Befestigungsvorrichtung 14' in Form eines Kugelgelenks 25.

Das Kugelgelenk 25 umfasst einen Schnellspanner 26, der das Kugelgelenk 25 fixiert, sodass das Gelenk fixiert ist. Am Kugelgelenk 25 ist eine in **Fig. 19** gezeigte Halterung 27 für den Gegenstand 7, insbesondere einen Laptop, Messgerät oder dergleichen angebracht. In **Fig. 19** ist die Halterung 27 als Anschlag ausgeführt, an welchem der Gegenstand 7 anliegen kann. Die Halterung 27 kann auch als in **Fig. 7** gezeigte Aufnahme ausgeführt sein, wobei mit der Aufnahme der Gegenstand 7 fest verbunden, beispielsweise verklemmt, verschraubt oder dergleichen sein kann. Die in **Fig. 19** gezeigte Halterung 27 ist zweckmäßig aufgrund des Kugelgelenks 25 horizontal ausrichtbar. Zweckmäßig kann die Halterung 27 auch in einer Ebene außerhalb der Horizontalen ausgerichtet sein, die beispielsweise ein komfortables Bedienen des Gegenstands 7, insbesondere des Laptops ermöglicht. Dadurch, dass die Sitzfläche 3 üblicherweise im Fahrzeug leicht geneigt ist, kann mit dem Kugelgelenk 25 die Neigung am Gegenstand 7 relativ zur Fahrtrichtung ausgeglichen werden. Außerdem kann der Gegenstand 7 nahezu beliebig ausgerichtet werden, sodass der Gegenstand 7 bedienbar bzw. nutzbar ist. Durch Arretierung des Kugelgelenks 25 mit dem Schnellspanner 26 ist der Gegenstand 7 fest mit dem Adapter 1 und bei mit dem Fahrzeug verrastetem Adapter 1 fest mit dem Fahrzeug verbunden.

### Bezugszeichenliste

- 1: Adapter
- 2: Sitzbank / Fahrzeugsitz
- 3: Sitzfläche
- 4: Rückenlehne
- 5: Rastvorrichtung
- 5': Rastvorrichtung
- 5": Rastvorrichtung
- 6: Halteplatte
- 7: Gegenstand
- 8: Abstandshalter
- 9: Oberseite
- 10: Unterseite
- 11: Stützbügel
- 12: Haltegriff
- 13: Haltebügel
- 14: Befestigungsvorrichtung
- 14': zweite Befestigungsvorrichtung
- 15: Laptophalter
- 16: Laptophalterung
- 17: Sitzplatte
- 18: Messgerätebefestigungsvorrichtung
- 19: Rastarm
- 20: unterer Rastfinger
- 20': Rastfinger
- 20": Rastfinger
- 21: oberer Rastfinger
- 21": Rastfinger
- 22": Rastfinger
- 22: Öse
- 23: Fahrzeugboden
- 24: Bodenstütze
- 25: Kugelgelenk
- 26: Schnellspanner
- 27: Halterung
- 28: Spalt
- P: Verschiebungsrichtung

## Patentansprüche

1. Adapter (1) für ein Kraftfahrzeug, mit einer Halteplatte (6), wobei an der Halteplatte (6) zwei Rastvorrichtungen (5) zum Verrasten des Adapters (1) mit einer am Kraftfahrzeug angebrachten Halterung angeordnet sind, und wobei an der Halteplatte (6) mindestens eine Befestigungsvorrichtung (14) zum Befestigen eines Gegenstands (7) am Adapter (1) angeordnet ist, wobei die Halteplatte (6) vorzugsweise einen Abstandhalter zum Halten eines Abstandes zwischen einem Fahrzeugsitz (2) und der Halteplatte (6) aufweist, wobei die besagten zwei Rastvorrichtungen (5) jeweils an einem Ende eines Rastarms (19) angeordnet sind und die Rastarme (19) derart am Abstandshalter (8) oder an der Halteplatte (6) geführt sind und derart mit einer Arretiervorrichtung zusammenwirken, dass die Rastarme (19) relativ zu den Abstandshaltern (8) bzw. relativ zur Halteplatte (6) in und entgegen einer Verschieberichtung (P) verschoben werden können, solange die Arretiervorrichtung nicht aktiviert ist, und dass sie an den Abstandshaltern (8) bzw. an der Halteplatte (6) festgelegt sind, wenn die Arretiervorrichtung aktiviert ist, **dadurch gekennzeichnet, dass** die Arretiervorrichtung ein Ratschenmechanismus ist, der so gestaltet ist, dass er es in aktiviertem Zustand gestattet, dass die Rastarme (19) derart relativ zu dem ihnen jeweils zugeordneten Abstandshalter (8) bzw. relativ zu der Halteplatte (6) verschoben werden können, dass die einer Rücksitzlehne des Fahrzeugs unmittelbar gegenüberliegende Stirnseite der Halteplatte (6) näher an die Rücksitzlehne herankommt oder sogar deren Polsterung örtlich zusammendrückt, und dass der es gestattet, dass der betroffene Rastarm (19) selbsttätig in dieser Position an dem ihm zugeordneten Abstandshalter (8) bzw. der ihm zugeordneten Halteplatte (6) festgelegt wird.

2. Adapter (1) nach Anspruch 1, **dadurch gekennzeichnet, dass** an einer Unterseite (10) der Halteplatte (6) der Abstandshalter (8) zum Halten eines Abstands zwischen einem Fahrzeugsitz (2) und der Halteplatte (6) vorgesehen ist, und dass der Gegenstand (7) an einer der Unterseite (10) gegenüberliegenden Oberseite (9) befestigbar ist.

3. Adapter (1) nach Anspruch 1 oder 2, **dadurch gekennzeichnet, dass** der Abstandshalter (8) zwei parallel verlaufende Rastarme (19) umfasst, und dass je eine der Rastvorrichtungen (5) an je einem Ende der Rastarme (19) angeordnet ist.

4. Adapter (1) nach einem der vorhergehenden Ansprüche, **dadurch gekennzeichnet, dass** die Rastarme (19) derart nach Art eines Teleskops relativ zu dem ihnen jeweils zugeordneten Abstandshalter (8) bzw. relativ zu der Halteplatte (6) verschoben werden können.

5. Adapter (1) nach einem der vorhergehenden Ansprüche, **dadurch gekennzeichnet, dass** der Ratschenmechanismus ein immer dichteres Heranschieben der Halteplatte (6) an die Rücksitzlehne oder deren immer stärkere Kompression erlaubt, aber verhindert, dass die Halteplatte (6) sich aus einer einmal erreichten Sperrposition wieder in Gegenrichtung, weg von der Rücksitzlehne bewegt.

6. Adapter (1) nach einem der vorhergehenden Ansprüche, **dadurch gekennzeichnet, dass** der Adapter (1) einen Stützbügel (11) zur Verhinderung einer Rotation um die Halterung (27) umfasst, und dass der Stützbügel (11) insbesondere einen Haltegriff (12) zum Halten des Adapters (1) umfasst.

7. Adapter (1) nach einem der vorhergehenden Ansprüche, **dadurch gekennzeichnet, dass** der Adapter (1) eine Sitzplatte (17) umfasst, die in einem Abstand zur Halteplatte (6) mit der Halteplatte (6) fest verbunden ist, wobei die Sitzplatte (17) zum Auflegen des Adapters (1) auf den Fahrzeugsitz (2) vorgesehen ist.

8. Adapter (1) nach einem der vorhergehenden Ansprüche, **dadurch gekennzeichnet, dass** der Adapter (1) einen Haltebügel (13) umfasst, und dass der Haltebügel (13) insbesondere stirnseitig, insbesondere an der der Rastvorrichtung (5) abgewandten Stirnseite des Adapters (1) angeordnet ist.

9. Adapter (1) nach einem der vorhergehenden Ansprüche, **dadurch gekennzeichnet, dass** die Befestigungsvorrichtung (14) lösbar ist und insbesondere eine Schraubverbindung, eine Klemmvorrichtung oder eine Bajonettverbindung ist.

10. Laptophalter (15) für ein Kraftfahrzeug, wobei der Laptophalter (15) einen Adapter (1) nach einem der vorhergehenden Ansprüche umfasst, und wobei der Laptophalter (15) an der Befestigungsvorrichtung (14) des Adapters (1) befestigt ist.

11. Messgerätebefestigungsvorrichtung (18) für ein Kraftfahrzeug, wobei die Messgerätebefestigungsvorrichtung (18) einen Adapter (1) nach einem der vorhergehenden Ansprüche 1-9 umfasst, wobei die Messgerätebefestigungsvorrichtung (18) an der Befestigungsvorrichtung (14) des Adapters (1) befestigt ist, und wobei die Messgerätebefestigungsvorrichtung (18) zum Befestigen von Messtechnik im Fahrzeug vorgesehen und geeignet ist.

## Claims

1. Adapter (1) for a motor vehicle, with a holding plate (6), wherein two latching devices (5) are arranged on the holding plate (6) for latching the adapter (1) to a holder attached to the motor vehicle, and wherein at least one fastening device (14) is arranged on the holding plate (6) for fastening an object (7) to the adapter (1), wherein the holding plate (6) preferably has a spacer for keeping a distance between a vehicle seat (2) and the holding plate (6), wherein said two latching devices (5) are each arranged at one end of a latch arm (19) and the latch arms (19) are guided on the spacer (8) or on the holding plate (6) and interact with a locking device in such a way that the latch arms (19) can be moved relative to the spacers (8) or relative to the holding plate (6) in and against a displacement direction (P) as long as the locking device is not activated, and that they are fixed on the spacers (8) or on the holding plate (6), when the locking device is activated, **characterized in that** the locking device is a ratchet mechanism which is designed in such a way that, when it is activated, it allows the latch arms (19) to be displaced relative to the spacer (8) assigned to them or relative to the holding plate (6) so that the end face of the holding plate (6) directly opposite a rear seat back of the vehicle approaches the rear seat back or even compresses its padding locally, and that it allows the latch arm (19) in question to be fixed automatically in this position on the spacer (8) assigned to it or the holding plate (6) assigned to it.

2. Adapter (1) according to claim 1, **characterized in that** the spacer (8) is provided on an underside (10) of the holding plate (6) for keeping a distance between a vehicle seat (2) and the holding plate (6), and that the object (7) can be fastened to an upper side (9) opposite the underside (10).

3. Adapter (1) according to claim 1 or 2, **characterized in that** the spacer (8) comprises two parallel, latch arms (19), and that one of the latching devices (5) is arranged at each end of the latch arms (19).

4. Adapter (1) according to one of the preceding claims, **characterized in that** the latch arms (19) can be displaced in the manner of a telescope relative to the spacer (8) assigned to them or relative to the holding plate (6).

5. Adapter (1) according to one of the preceding claims, **characterized in that** the ratchet mechanism allows the holding plate (6) to be pushed closer and closer to the rear seat back or its ever increasing compression, but prevents the holding plate (6) from moving from a locked position once it has been reached back in the opposite direction, away from the rear seat back.

6. Adapter (1) according to one of the preceding claims, **characterized in that** the adapter (1) comprises a support bracket (11) to prevent rotation around the holder (27), and that the support bracket (11) in particular has a handle (12) for holding the adapter (1).

7. Adapter (1) according to one of the preceding claims, **characterized in that** the adapter (1) comprises a seat plate (17) which is firmly connected to the holding plate (6) at a distance from the holding plate (6), wherein the seat plate (17) is provided for placing the adapter (1) on the vehicle seat (2).

8. Adapter (1) according to one of the preceding claims, **characterized in that** the adapter (1) comprises a retaining bracket (13), and that the retaining bracket (13) is arranged in particular on the end face, in particular on the end face of the adapter (1) facing away from the latching device (5).

9. Adapter (1) according to one of the preceding claims, **characterized in that** the fastening device (14) is detachable and in particular is a screw connection, a clamping device or a bayonet connection.

10. Laptop holder (15) for a motor vehicle, wherein the laptop holder (15) comprises an adapter (1) according to one of the preceding claims, and wherein the laptop holder (15) is fastened to the fastening device (14) of the adapter (1).

11. Device for fastening a measuring tool (18) in a motor vehicle, wherein the device for fastening a measuring tool (18) comprises an adapter (1) according to one of the preceding claims 1 to 9, wherein the device for fastening a measuring tool (18) is fastened to the fastening device (14) of the adapter (1), and wherein the device for fastening a measuring tool (18) is intended and suitable for fastening measuring technology in the vehicle.

## Revendications

1. Adaptateur (1) destiné à un véhicule automobile, avec une plaque de maintien (6), deux dispositifs d'encliquetage (5) qui servent à encliqueter l'adaptateur (1) au moyen d'un support placé sur le véhicule automobile étant disposés sur la plaque de maintien (6), et au moins un dispositif de fixation (14) servant à fixer un objet (7) sur l'adaptateur (1) étant disposé sur la plaque de maintien (6), la plaque de maintien (6) présentant de préférence un écarteur servant à conserver une distance entre un siège du véhicule (2) et la plaque de maintien (6), les deux dispositifs d'encliquetage (5) mentionnés étant disposés respectivement à une extrémité d'un bras d'encliquetage (19) et les bras d'encliquetage (19) étant guidés sur l'écarteur (8) ou sur la plaque de maintien (6) et agissant avec un dispositif de verrouillage de sorte que les bras d'encliquetage (19) puissent être déplacés dans et à l'opposé d'une direction de déplacement (P) relativement aux écarteurs (8) voire à la plaque de maintien (6) tant que le dispositif de verrouillage n'est pas activé, et qu'ils sont fixés sur les écarteurs (8) voire sur la plaque de maintien (6), lorsque le dispositif de verrouillage est activé, **caractérisé par le fait que** le dispositif de verrouillage constitue un mécanisme à cliquet conçu de telle sorte qu'il permet en état activé que les bras d'encliquetage (19) puissent être déplacés relativement à l'écarteur (8) leur étant respectivement attribué voire relativement à la plaque de maintien (6), de sorte que le côté frontal de la plaque de maintien (6) immédiatement en vis-à-vis d'un dossier de siège arrière du véhicule s'approche davantage du dossier de siège arrière ou même presse localement son rembourrage, et permettant que le bras d'encliquetage (19) concerné soit fixé de manière autonome dans cette position sur l'écarteur (8) lui étant attribué voire sur la plaque de maintien (6) lui étant attribuée.

2. Adaptateur (1) selon la revendication 1 **caractérisé par le fait que**, sur le côté inférieur (10) de la plaque de maintien (6), l'écarteur (8) est prévu pour le maintien d'une distance entre un siège du véhicule (2) et la plaque de maintien (6), et que l'objet (7) peut être fixé sur un côté supérieur (9) situé à l'opposé du côté inférieur (10).

3. Adaptateur (1) selon la revendication 1 ou 2 **caractérisé par le fait que** l'écarteur (8) comprend deux bras d'encliquetage (19) à l'alignement parallèle, et en ce que l'un des dispositifs d'encliquetage (5) est disposé respectivement à une extrémité des bras d'encliquetage (19).

4. Adaptateur (1) selon l'une des revendications précédentes **caractérisé par le fait que** les bras d'encliquetage (19) peuvent être déplacés à la manière d'un système télescopique relativement à l'écarteur (8) leur étant respectivement attribué voire relativement à la plaque de maintien (6).

5. Adaptateur (1) selon l'une des revendications précédentes **caractérisé par le fait que** le mécanisme à cliquet permet un déplacement de plus en plus proche de la plaque de maintien (6) vers le dossier de siège arrière ou bien sa compression de plus en plus forte, mais évite que la plaque de maintien (6) ne se déplace de nouveau en direction opposée, en s'éloignant du dossier de siège arrière, à partir d'une position de verrouillage déjà atteinte.

6. Adaptateur (1) selon l'une des revendications précédentes **caractérisé par le fait que** l'adaptateur (1) comprend une bride d'appui (11) permettant d'éviter une rotation autour du support (27), et que la bride d'appui (11) comprend en particulier une poignée de maintien (12) servant à tenir l'adaptateur (1).

7. Adaptateur (1) selon l'une des revendications précédentes **caractérisé par le fait que** l'adaptateur (1) comprend une plaque d'assise (17) qui est fermement reliée à la plaque de maintien (6) à une certaine distance de cette plaque de maintien (6), la plaque d'assise (17) étant conçue pour poser l'adaptateur (1) sur le siège du véhicule (2).

8. Adaptateur (1) selon l'une des revendications précédentes **caractérisé par le fait que** l'adaptateur (1) comprend une bride de maintien (13), et que la bride de maintien (13) est disposée en particulier du côté frontal, en particulier sur le côté frontal de l'adaptateur (1) opposé au dispositif d'encliquetage (5).

9. Adaptateur (1) selon l'une des revendications précédentes **caractérisé par le fait que** le dispositif de fixation (14) est détachable et se présente en particulier sous la forme d'un raccord vissé, d'un dispositif de serrage ou d'un raccord à baïonnette.

10. Support d'ordinateur portable (15) pour un véhicule automobile, le support d'ordinateur portable (15) comprenant un adaptateur (1) selon l'une des revendications précédentes, et le support d'ordinateur portable (15) étant fixé au dispositif de fixation (14) de l'adaptateur (1).

11. Dispositif de fixation pour appareil de mesure (18) pour un véhicule automobile, le dispositif de fixation pour appareil de mesure (18) comprenant un adaptateur (1) selon l'une des revendications précédentes 1 à 9, le dispositif de fixation pour appareil de mesure (18) étant fixé sur le dispositif de fixation (14) de l'adaptateur (1), et le dispositif de fixation pour appareil de mesure (18) étant prévu pour et approprié à la fixation d'une technologie de mesure dans le véhicule.
